# EUROPÄISCHE PATENTSCHRIFT

(11) **EP 3 540 332 B1**
(45) Veröffentlichungstag und Bekanntmachung des Hinweises auf die Patenterteilung: **15.07.2020**
(21) Anmeldenummer: 18161912.3
(22) Anmeldetag: 15.03.2018
(51) Int. Cl.: F25B 1/10, F25B 15/00, F25B 15/04, F25B 25/02

(54) **SORPTIONSWÄRMEPUMPE UND SORPTIONSKREISPROZESS**
SORPTION HEAT PUMP AND SORPTION CIRCUIT PROCESS
POMPE À CHALEUR A ABSORPTION ET PROCÉDÉ DE CIRCUIT À ABSORPTION

(43) Veröffentlichungstag der Anmeldung: 18.09.2019
(73) Patentinhaber: AGO AG Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 3 236 178
- WO-A1-88/00319
- DD-A1- 236 979
- DE-A1- 3 116 788
- DE-A1- 3 716 642
- DE-C- 953 378
- DE-C1- 3 536 953
- DE-C1- 3 808 257
- DE-C1- 4 104 263
- JP-A- H1 054 625
- US-A- 2 182 098
- US-A- 5 582 020

## Beschreibung

Die Erfindung betrifft zunächst eine Sorptionswärmepumpe mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung auf einem Hochdruckniveau das Kältemittel absorbiert und dabei Wärme abgibt, einem Drosselelement, das die reiche Lösung nach Austritt aus dem Absorber auf das Niederdruckniveau entspannt, einem Austreiber, in dem die reiche Lösung nach Austritt aus dem Drosselelement einen von außen zugeführten Wärmestrom aufnimmt und dabei das Kältemittel austreibt, einem Förderelement, das das Kältemittel nach Austritt aus dem Austreiber in den Absorber fördert, und einer Pumpe, die die arme Lösung nach Austritt aus dem Austreiber in den Absorber pumpt. Die Erfindung betrifft weiterhin einen Sorptionskreisprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung auf einem Hochdruckniveau das Kältemittel absorbiert und dabei Wärme abgibt, dann die reiche Lösung erst auf ein Niederdruckniveau entspannt wird, anschließend einen dem Sorptionskreisprozess von außen zugeführten Wärmestrom aufnimmt und dabei das Kältemittel austreibt, dann das Kältemittel aus der reichen Lösung ausgetrieben und gefördert, und die arme Lösung gepumpt und der Sorptionskreisprozess geschlossen wird.

Solche Sorptionswärmepumpen und -kreisprozesse sind bekannt aus DD 236979 A1, CN 1240953 A1 und DE 3808257 C1. In den bekannten Wärmepumpen und - prozessen sind die Wärmesenken- und Wärmequellentemperaturen durch das im Absorber absorbierte Kältemittel beschränkt. Das Dokument EP 3 236 178 A1 offenbart eine Sorptionswärmepumpe gemäß dem Oberbegriff von Anspruch 1.

### Aufgabe

Der Erfindung liegt die Aufgabe zugrunde, höhere Wärmesenken- und niedrigere Wärmequellentemperaturen zu ermöglichen.

### Lösung

Gemäß der vorliegenden Erfindung wird die obige Aufgabe durch die Merkmale von Anspruch 1 gelöst. Ausgehend von den bekannten Sorptionswärmepumpen wird nach der Erfindung vorgeschlagen, ein zweites Drosselelement vorzusehen, das die reiche Lösung vor Eintritt in das Drosselelement auf ein Zwischendruckniveau entspannt, sowie einen zweiten Absorber, in dem die reiche Lösung auf dem Zwischendruckniveau einen Teilstrom des Kältemittels absorbiert und dabei Wärme an einen Teilstrom der armen Lösung nach Austritt aus dem Austreiber abgibt. Durch die höhere Konzentration kann bereits bei einer niedrigeren Temperatur Wärme aufgenommen und Kältemittel ausgetrieben werden.

Durch eine zusätzliche Erwärmung der armen Lösung wird zusätzlich Kältemittel ausgetrieben. Dadurch wird die arme Lösung ärmer und ermöglicht bei einer höheren Temperatur im Absorber Kältemittel zu absorbieren und somit eine höhere Wärmesenkentemperatur.

Vorzugsweise weist eine erfindungsgemäße Sorptionswärmepumpe einen parallel zu dem Absorber angeordneten dritten Absorber auf, in dem ein Teilstrom der armen Lösung vor Eintritt in den Absorber einen Teilstrom des Kältemittels vor Eintritt in den Absorber absorbiert und dabei an die arme Lösung vor Eintritt in den Absorber Wärme abgibt. Durch die Temperaturerhöhung der armen Lösung steigt das Temperaturniveau der Nutzwärme.

Vorzugsweise weist eine erfindungsgemäße Sorptionswärmepumpe einen zweiten Austreiber auf, in dem ein Teilstrom der reichen Lösung parallel zu dem Austreiber Wärme aus der reichen Lösung zwischen Absorber und Drosselelement aufnimmt. Die verbleibende reiche Lösung kann so in dem Austreiber Wärme auf einem niedrigeren Temperaturniveau aufnehmen.

Vorzugsweise weist eine erfindungsgemäße Sorptionswärmepumpe einen Lösungswärmeübertrager auf, in dem die arme Lösung vor Eintritt in den Absorber Wärme aus der reichen Lösung zwischen Absorber und Drosselelement aufnimmt. Durch einen solchen Lösungswärmeübertrager wird die energetische Effizienz weiter gesteigert.

Vorzugsweise weist eine erfindungsgemäße Sorptionswärmepumpe einen Verdichter, der das gasförmige Kältemittel in den Absorber fördert. Sorptionswärmepumpen mit Verdichtern für das gasförmige Kältemittel sind allgemein bekannt.

Vorzugsweise weist eine solche Sorptionswärmepumpe einen dritten Austreiber auf, in dem ein Teilstrom der reichen Lösung parallel zu dem Austreiber Wärme aus dem Kältemittel auf dem Zwischendruckniveau aufnimmt.

Alternativ vorzugsweise weist eine erfindungsgemäße Sorptionswärmepumpe einen Verflüssiger auf, der das Kältemittel nach Austritt aus dem Austreiber verflüssigt, eine Kältemittelpumpe, die das flüssige Kältemittel nach Austritt aus dem Verflüssiger in einen Verdampfer pumpt, in dem es vor Eintritt in den Absorber einen zweiten von außen zugeführten Wärmestrom aufnimmt und verdampft. Solche Sorptionswärmepumpen sind als Wärmetransformatoren allgemein bekannt: Sie zeichnen sich durch vier Hauptwärmeübertrager - Absorber und Verdampfer auf Hochdruck-, und Austreiber und Verflüssiger auf Niederdruckniveau - sowie je eine Kältemittel- und eine Lösungsmittelpumpe und ein Drosselelement für die reiche Lösung zwischen den Druckniveaus aus. Dem Austreiber und dem Verdampfer wird Wärme auf einem mittleren Temperaturniveau von Außen zugeführt, der Absorber gibt Nutzwärme auf einem höheren und der Verflüssiger Abwärme auf einem niedrigeren Temperaturniveau ab. Wärmetransformatoren werden daher auch als "Wärmestromspalter" bezeichnet.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Ausgehend von den bekannten Sorptionskreisprozessen wird nach der Erfindung vorgeschlagen, dass das Kältemittel aus dem Niederdruckniveau zunächst auf ein Zwischendruckniveau gefördert und die reiche Lösung aus dem Hochdruckniveau zunächst auf das Zwischendruckniveau entspannt wird, einen Teilstrom des Kältemittels absorbiert und dabei Wärme an einen Teilstrom der nach dem Austreiben des Kältemittels verbleibenden armen Lösung abgibt. Das erfindungsgemäße Verfahren wird mit einer der vorstehend beschriebenen Sorptionswärmepumpen ausgeführt und zeichnet sich gleichermaßen durch die dort aufgeführten Vorteile aus.

### Ausführungsbeispiel

Die Erfindung wird nachfolgend anhand von Ausführungsbeispielen erläutert. Es zeigen
- Fig. 1: eine erste erfindungsgemäße Sorptionswärmepumpe,
- Fig. 2: eine zweite erfindungsgemäße Sorptionswärmepumpe,
- Fig. 3: eine dritte erfindungsgemäße Sorptionswärmepumpe,
- Fig. 4: eine vierte erfindungsgemäße Sorptionswärmepumpe,
- Fig. 5: eine fünfte erfindungsgemäße Sorptionswärmepumpe,
- Fig. 6: eine sechste erfindungsgemäße Sorptionswärmepumpe,
- Fig. 7: eine siebte erfindungsgemäße Sorptionswärmepumpe,
- Fig. 8: eine achte erfindungsgemäße Sorptionswärmepumpe,
- Fig. 9: eine neunte erfindungsgemäße Sorptionswärmepumpe,
- Fig. 10: eine zehnte erfindungsgemäße Sorptionswärmepumpe und
- Fig. 11: eine elfte erfindungsgemäße Sorptionswärmepumpe.

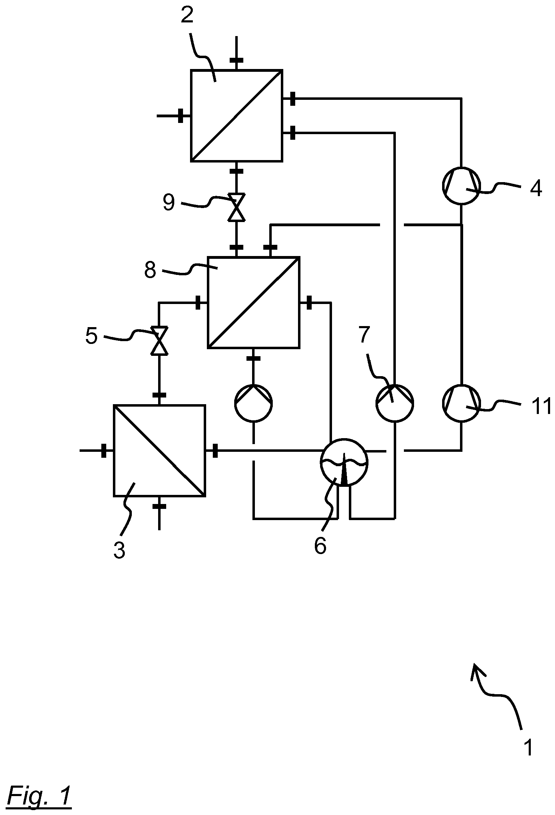

Die in Figur 1 gezeigte erste erfindungsgemäße Sorptionswärmepumpe 1 weist einen Absorber 2, einen Austreiber 3, einen Verdichter 4 und ein Drosselelement auf.

In der ersten Sorptionswärmepumpe 1 wird eine reiche Lösung - mit Ammoniak als Kältemittel hoch angereichertes Wasser als Lösungsmittel - auf einem Niederdruckniveau in dem Austreiber 3 durch einen von außen zugeführten Wärmestrom aufgeheizt und treibt in einem anschließenden Abscheider 6 gasförmiges Kältemittel aus, das mittels des Verdichters 4 auf ein Hochdruckniveau in den Absorber 2 gefördert wird.

Die in dem Abscheider 6 verbliebene arme Lösung wird mittels einer Lösungsmittelpumpe 7 als Förderelement gleichfalls auf das Hochdruckniveau in den Absorber 2 gepumpt. In dem Absorber 2 absorbiert die arme Lösung das gasförmige Kältemittel und gibt dabei einen Nutzwärmestrom ab. Die reiche Lösung wird im Drosselelement 5 wieder auf das Niederdruckniveau entspannt und in den Austreiber 3 geführt und schließt den Kreisprozess.

Zusätzlich weist die erste Sorptionswärmepumpe 1 einen zweiten Absorber 8 auf einem Zwischendruckniveau zwischen dem Hochdruck- und dem Niederdruckniveau auf. Nach Austritt aus dem Absorber 2 wird die reiche Lösung mit einem zweiten Drosselelement 9 zunächst auf das Zwischendruckniveau entspannt, absorbiert in dem zweiten Absorber 8 einen Teilstrom des Kältemittels und wird über das Drosselelement 5 erst dann in den Austreiber 3 geführt. Der Teilstrom wird hierzu aus dem Kältemittel zwischen dem Verdichter 4 und einen diesem vorgeschalteten zweiten Verdichter 10 als zweites Förderelement ausgekoppelt, die Absorptionswärme wird einem Teilstrom der hinter dem Austreiber 3 verbleibenden armen Lösung zugeführt, der anschließend in den Abscheider 6 zurück zirkuliert.

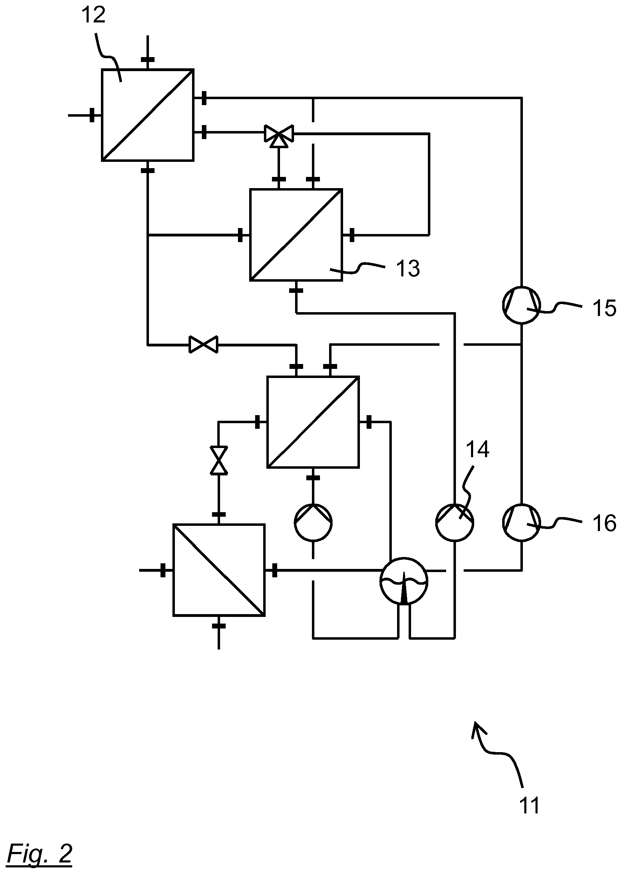

Die in Figur 2 dargestellte zweite erfindungsgemäße Sorptionswärmepumpe 11 entspricht zunächst im Wesentlichen der ersten Sorptionswärmepumpe 1. In einem dem Absorber 12 parallel angeordneten dritten Absorber 13 absorbiert ein Teilstrom der von der Lösungsmittelpumpe 14 gepumpten armen Lösung einen Teilstrom des von dem Verdichter 15 und dem zweiten Verdichter 16 geförderten Kältemittels. Die dabei freiwerdende Wärme wird genutzt, um das Temperaturniveau des in den Absorber 12 einströmenden verbleibenden Reststroms der armen Lösung anzuheben.

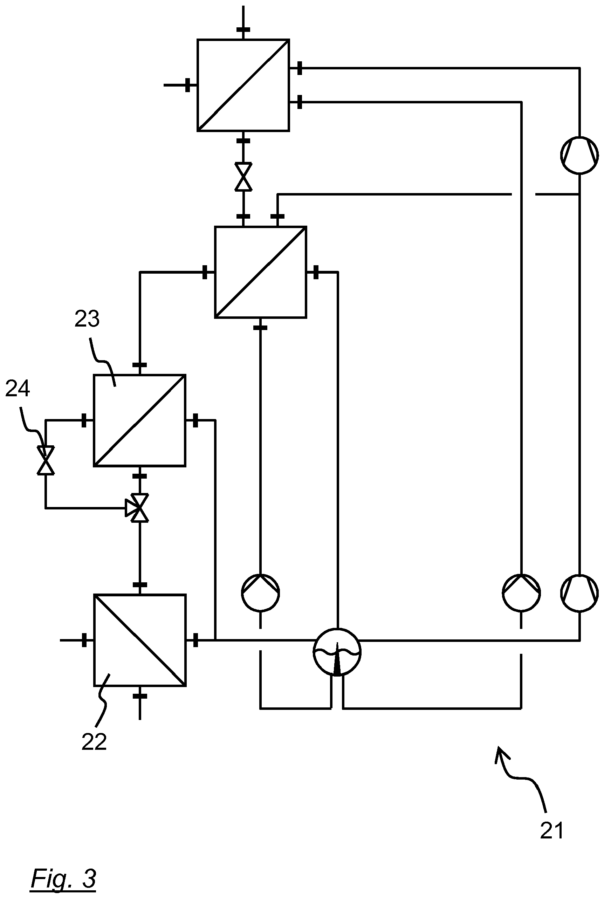

Die in Figur 3 dargestellte dritte erfindungsgemäße Sorptionswärmepumpe 21 entspricht wiederum zunächst im Wesentlichen der ersten Sorptionswärmepumpe 1. In einem dem Austreiber 22 vorgeschalteten zweiten Austreiber 23 gibt zusätzlich die reiche Lösung vor dem Drosselelement 24 Wärme an einen hinter dem Drosselelement 24 ausgekoppelten Teilstrom der reichen Lösung ab.

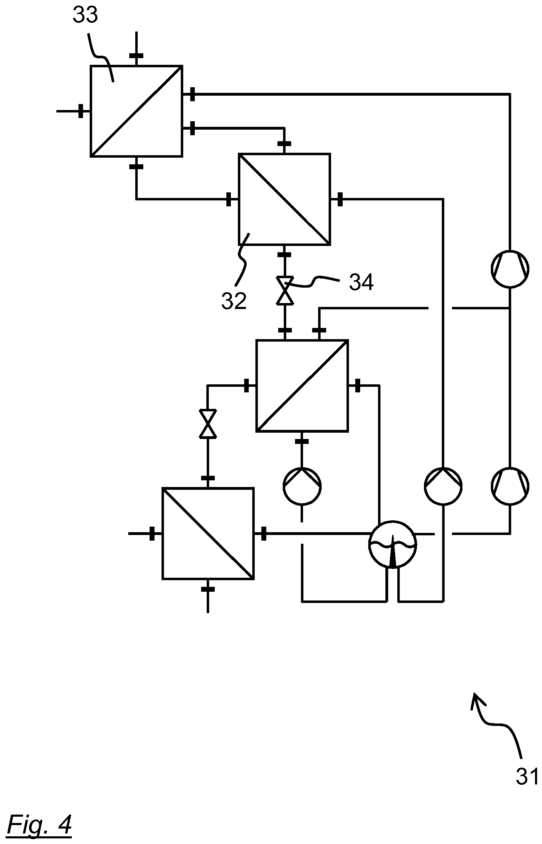

Auch die in Figur 4 dargestellte vierte erfindungsgemäße Sorptionswärmepumpe 31 entspricht wieder zunächst im Wesentlichen der ersten Sorptionswärmepumpe 1. In einem Lösungswärmeübertrager 32 nimmt außerdem die arme Lösung vor Eintritt in den Absorber 33 Wärme aus der reichen Lösung zwischen Absorber und Drosselelement 34 auf.

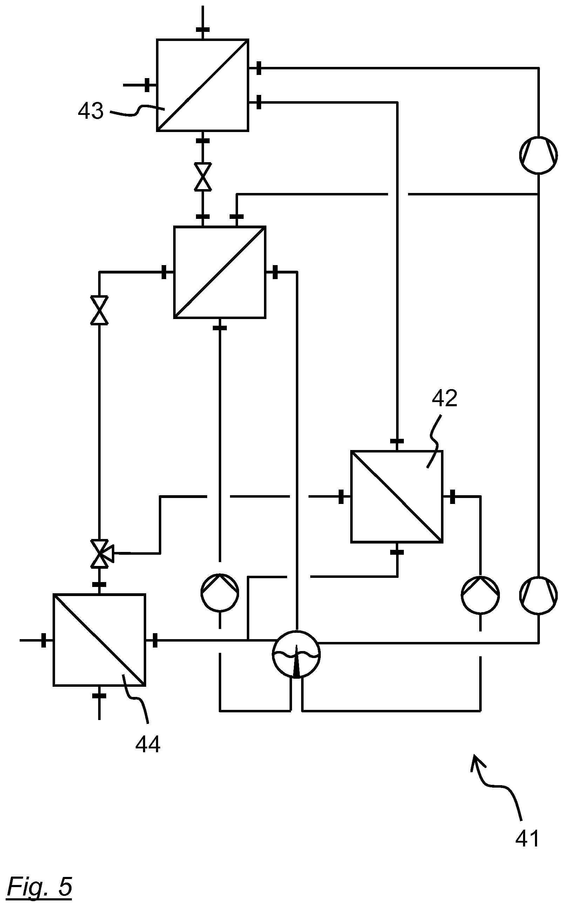

Zuletzt entspricht auch die in Figur 5 dargestellte fünfte erfindungsgemäße Sorptionswärmepumpe 41 zunächst im Wesentlichen der ersten Sorptionswärmepumpe 1. In einem dritten Austreiber 42 gibt das Kältemittel vor Eintritt in den Absorber 43 Wärme an einen vor dem Austreiber 44 ausgekoppelten Teilstrom der reichen Lösung ab.

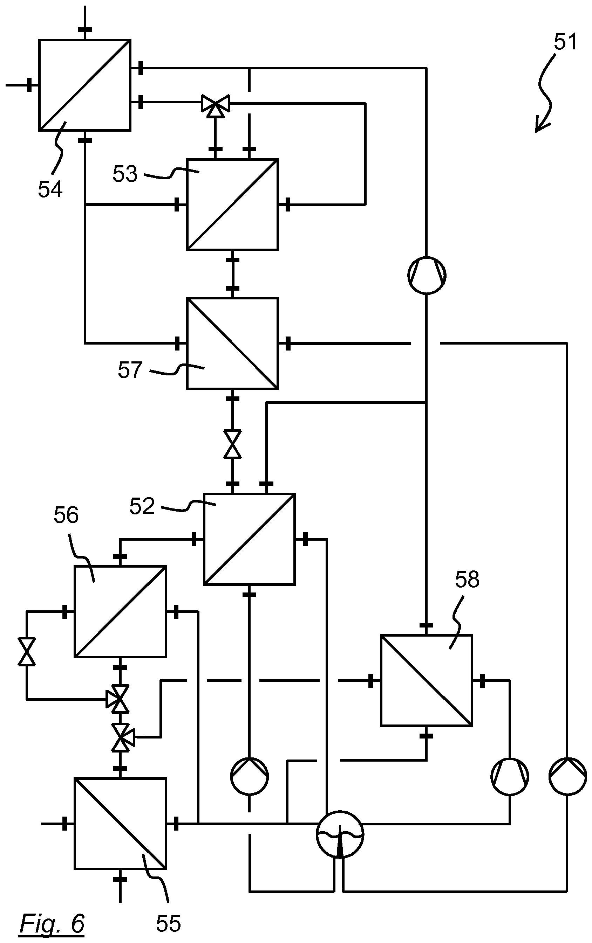

Die in Figur 6 dargestellte sechste erfindungsgemäße Sorptionswärmepumpe 51 vereint die Merkmale der vorgenannten und weist insbesondere einen zweiten Absorber 52 auf einem Zwischendruckniveau, eine dritten Absorber 53 parallel zu dem Absorber 54, einen dem Austreiber 55 vorgeschalteten zweiten Austreiber 56, einen Lösungswärmeübertrager 57 und einen parallel zu dem Austreiber 55 angeordneten dritten Austreiber 58 sowie die jeweils erforderlichen zusätzlichen Aggregate auf.

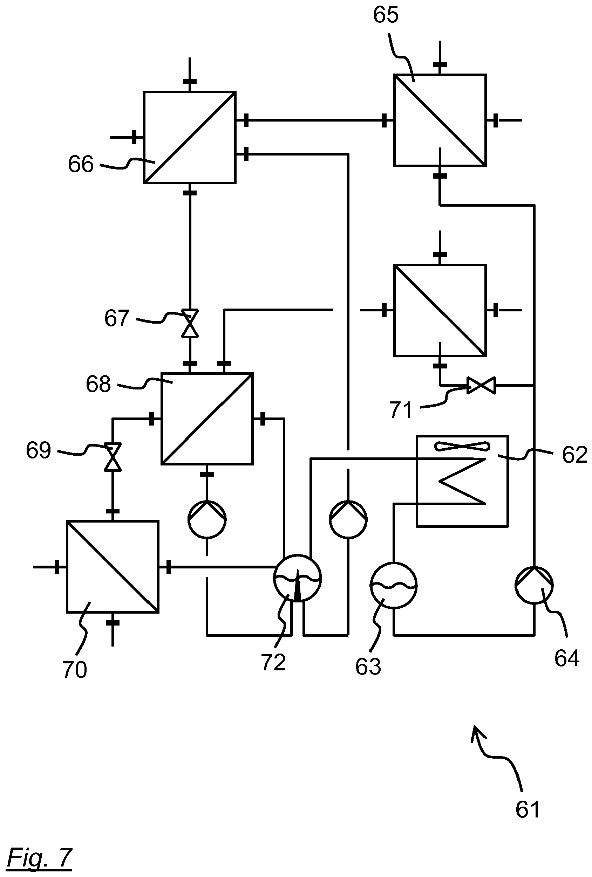

Die in Figur 7 dargestellte siebte erfindungsgemäße Sorptionswärmepumpe 61 entspricht wieder zunächst im Wesentlichen der ersten Sorptionswärmepumpe 1. Das Kältemittel gibt hier aber in einem Verflüssiger 62 Wärme an die Umgebung ab, wird in einem anschließenden weiteren Abscheider 63 verflüssigt und anstelle eines Verdichters mittels einer Kältemittelpumpe 64 als Förderelement auf das Hochdruckniveau in einen Verdampfer 65 gepumpt. In dem Verdampfer 65 nimmt das Kältemittel aus einem zweiten von außen zugeführten Wärmestrom Verdampfungswärme auf und strömt erst dann gasförmig in den Absorber 66. Die siebte Sorptionswärmepumpe 61 eignet sich zur Nutzung als Wärmetransformator.

Nach Austritt aus dem Absorber 66 wird die reiche Lösung mit einem zweiten Drosselelement 67 zunächst auf das Zwischendruckniveau entspannt, absorbiert in dem zweiten Absorber 68 einen Teilstrom des Kältemittels und wird über das Drosselelement 69 erst dann in den Austreiber 70 geführt. Der Teilstrom wird hierzu aus dem Kältemittel zwischen der Kältemittelpumpe 64 und dem Verdampfer 65 ausgekoppelt und über ein weiteres Drosselelement 71 auf das Zwischendruckniveau entspannt, die Absorptionswärme wird einem Teilstrom der hinter dem Austreiber 70 verbleibenden armen Lösung zugeführt, der anschließend in den Abscheider 72 zurück zirkuliert.

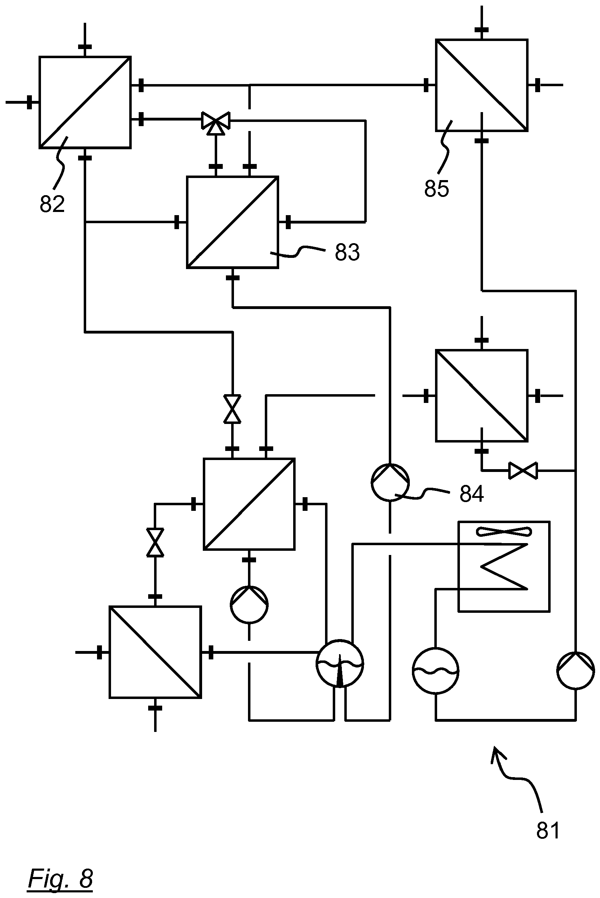

Die in Figur 8 dargestellte achte erfindungsgemäße Sorptionswärmepumpe 81 entspricht im Wesentlichen der siebten Sorptionswärmepumpe 61. Wie in der zweiten Sorptionswärmepumpe 11 absorbiert in einem dem Absorber 82 parallel angeordneten dritten Absorber 83 ein Teilstrom der von der Lösungsmittelpumpe 84 geförderten armen Lösung einen Teilstrom des aus dem Verdampfer 85 ausströmenden Kältemittels.

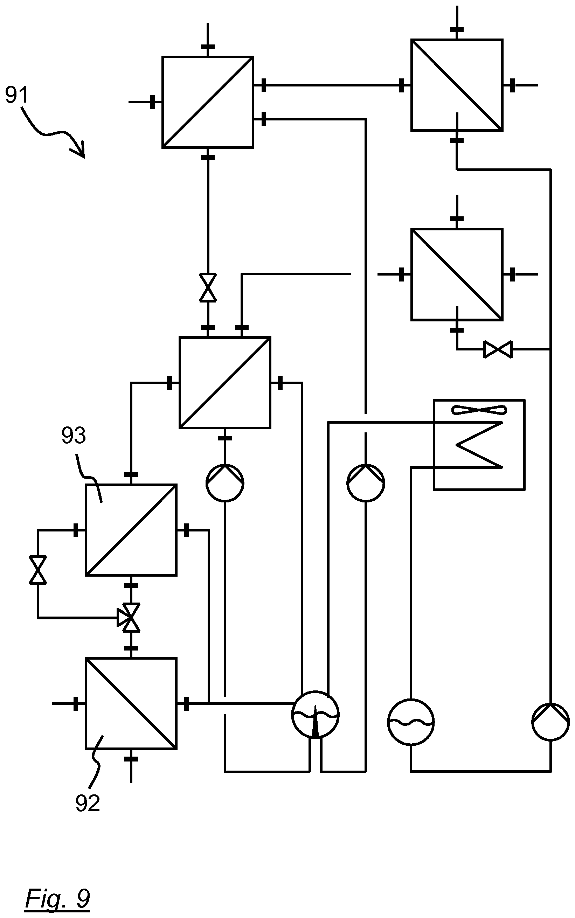

Auch die in Figur 9 dargestellte neunte erfindungsgemäße Sorptionswärmepumpe 91 entspricht zunächst im Wesentlichen der siebten Sorptionswärmepumpe 61. Wie in der dritten Sorptionswärmepumpe 21 gibt in einem dem Austreiber 92 vorgeschalteten zweiten Austreiber 93 zusätzlich die reiche Lösung vor dem Drosselelement 94 Wärme an einen hinter dem Drosselelement 94 ausgekoppelten Teilstrom der reichen Lösung ab.

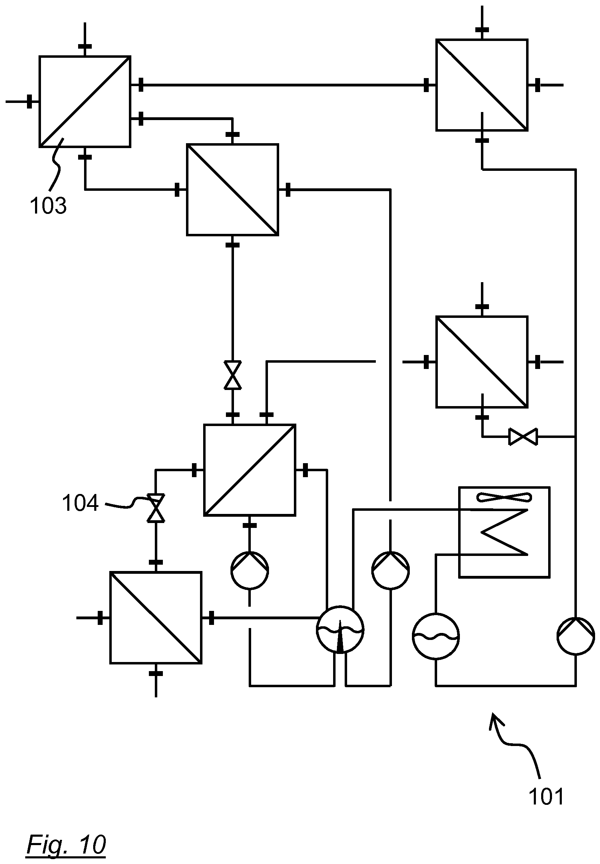

Die in Figur 10 dargestellte zehnte erfindungsgemäße Sorptionswärmepumpe 101 entspricht gleichfalls zunächst im Wesentlichen der siebten Sorptionswärmepumpe 61. Wie in der vierten Sorptionswärmepumpe 31 nimmt in einem Lösungswärmeübertrager 102 außerdem die arme Lösung vor Eintritt in den Absorber 103 Wärme aus der reichen Lösung zwischen Absorber 103 und Drosselelement 104 auf.

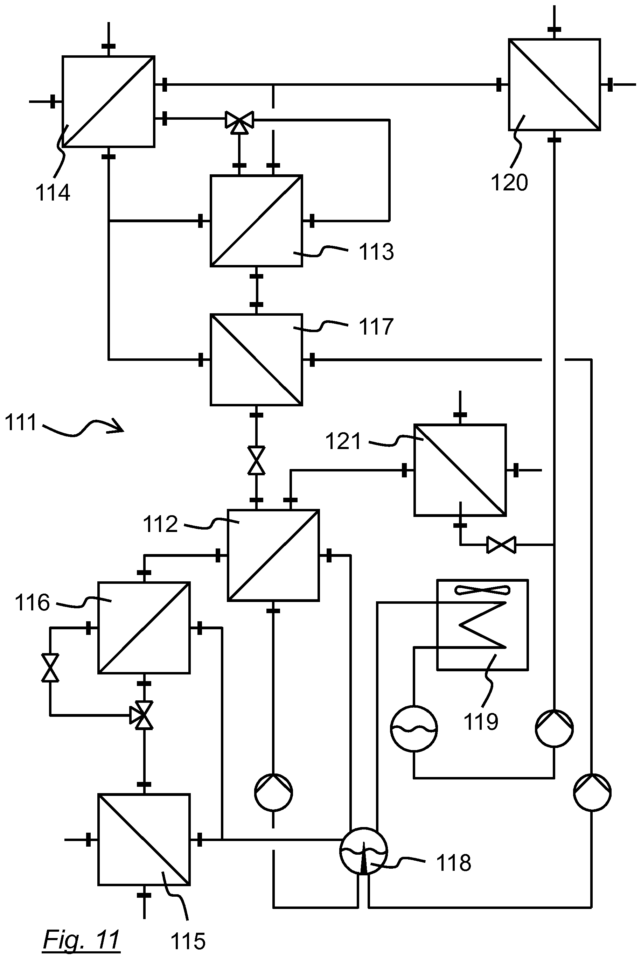

Die in Figur 11 dargestellte elfte erfindungsgemäße Sorptionswärmepumpe 111 vereint die Merkmale der vorgenannten Wärmetransformatoren und weist insbesondere einen zweiten Absorber 112 auf einem Zwischendruckniveau, einen dritten Absorber 113 parallel zu dem Absorber 114, einen dem Austreiber 115 vorgeschalteten zweiten Austreiber 116 und einen Lösungswärmeübertrager 117 sowie die jeweils erforderlichen zusätzlichen Aggregate auf.

Das Hochdruckniveau der elften Sorptionswärmepumpe 111 liegt bei 19,3 *bar*, das Zwischendruckniveau bei 13,5 *bar*. In der elften Sorptionswärmepumpe 111 wird dem Austreiber 115 75 % der reichen Lösung und von außen ein Heizmittel auf 58 °C zugeführt. Im Austreiber 115 wird die reiche Lösung auf 54 °C aufgeheizt und das Heizmittel auf 42 °C abgekühlt. Aus dem anschließenden Abscheider 118 wird die arme Lösung mit zwei Strömen bei 53 °C bzw. 58 °C abgezogen.

Das Kältemittel aus dem Abscheider 118 wird in dem Verflüssiger 119 auf 18 °C abgekühlt. Auch dem Verdampfer 120 wird das Heizmittel auf 58 °C zugeführt. Dort gibt es Wärme an das Kältemittel auf dem Hochdruckniveau ab und kühlt dabei auf 42 °C ab. Das Kältemittel verlässt den Verdampfer 120 mit 48 °C.

In dem Absorber 114 absorbiert die arme Lösung das Kältemittel, heizt dabei einen Nutzwasserstrom von 70 °C auf 80 °C auf und verlässt den Absorber 114 als reiche Lösung mit 72 °C. Im Lösungswärmeübertrager 117 kühlt die reiche Lösung auf 63 °C ab und heizt dabei die arme Lösung auf 70 °C auf.

Im zweiten Absorber 112 kühlt die reiche Lösung weiter auf 57 °C ab und heizt die aus dem Abscheider 118 umlaufende arme Lösung von 53 °C auf 58 °C auf. Hierzu absorbiert die reiche Lösung Kältemittel bei 39 °C. In dem zweiten Verdampfer 121 im Zwischendruckniveau nimmt das Kältemittel Wärme aus einem dritten Heizmittelstrom auf, der dabei von 42 °C auf 41 °C abkühlt.

In dem zweiten Austreiber 116 kühlt die reiche Lösung auf dem Zwischendruckniveau weiter auf 42 °C ab und heizt den auf dem Niederdruckniveau vor dem Austreiber 115 abgezweigten Teilstrom im Umfang von 25 % der reichen Lösung auf 52 °C auf.

In den Figuren sind
- 1: Sorptionswärmepumpe
- 2: Absorber
- 3: Austreiber
- 4: Verdichter
- 5: Drosselelement
- 6: Abscheider
- 7: Lösungsmittelpumpe
- 8: zweiter Absorber
- 9: zweites Drosselelement
- 10: zweiter Verdichter
- 11: Sorptionswärmepumpe
- 12: Absorber
- 13: dritter Absorber
- 14: Lösungsmittelpumpe
- 15: Verdichter
- 16: zweiter Verdichter
- 21: Sorptionswärmepumpe
- 22: Austreiber
- 23: zweiter Austreiber
- 24: Drosselelement
- 31: Sorptionswärmepumpe
- 32: Lösungswärmeübertrager
- 33: Absorber
- 34: Drosselelement
- 41: Sorptionswärmepumpe
- 42: dritter Austreiber
- 43: Absorber
- 44: Austreiber
- 51: Sorptionswärmepumpe
- 52: zweiter Absorber
- 53: dritter Absorber
- 54: Absorber
- 55: Austreiber
- 56: zweiter Austreiber
- 57: Lösungswärmeübertrager
- 58: dritter Austreiber
- 61: Sorptionswärmepumpe
- 62: Verflüssiger
- 63: Abscheider
- 64: Kältemittelpumpe
- 65: Verdampfer
- 66: Absorber
- 67: zweites Drosselelement
- 68: zweiter Absorber
- 69: Drosselelement
- 70: Austreiber
- 71: weiteres Drosselelement
- 72: Abscheider
- 81: Sorptionswärmepumpe
- 82: Absorber
- 83: dritter Absorber
- 84: Lösungsmittelpumpe
- 85: Verdampfer
- 91: Sorptionswärmepumpe
- 92: Austreiber
- 93: zweiter Austreiber
- 94: Drosselelement
- 101: Sorptionswärmepumpe
- 102: Lösungswärmeübertrager
- 103: Absorber
- 104: Drosselelement
- 111: Sorptionswärmepumpe
- 112: zweiter Absorber
- 113: dritter Absorber
- 114: Absorber
- 115: Austreiber
- 116: zweiter Austreiber
- 117: Lösungswärmeübertrager
- 118: Abscheider
- 119: Verflüssiger
- 120: Verdampfer
- 121: zweiter Verdampfer

## Patentansprüche

1. Sorptionswärmepumpe (1, 11, 21, 31, 41, 51, 61, 81, 91, 101, 111) mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber (2, 12, 33, 43, 54, 66, 82, 103, 114), in dem die arme Lösung auf einem Hochdruckniveau das Kältemittel absorbiert und dabei Wärme abgibt, einem Drosselelement (5, 24, 34, 69, 94, 104), das die reiche Lösung nach Austritt aus dem Absorber (2, 12, 33, 43, 54, 66, 82, 103, 114) auf das Niederdruckniveau entspannt, einem Austreiber (3, 22, 44, 55, 70, 92, 115), in dem die reiche Lösung nach Austritt aus dem
Drosselelement (5, 24, 34, 69, 94, 104) einen von außen zugeführten Wärmestrom aufnimmt und dabei das Kältemittel austreibt, einem Förderelement, das das Kältemittel nach Austritt aus dem Austreiber (3, 22, 44, 55, 70, 92, 115) in den
Absorber (2, 12, 33, 43, 54, 66, 82, 103, 114) fördert, und einer Pumpe, die die arme Lösung nach Austritt aus dem
Austreiber (3, 22, 44, 55, 70, 92, 115) in den
Absorber (2, 12, 33, 43, 54, 66, 82, 103, 114) pumpt, ***gekennzeichnet durch*** ein zweites Drosselelement (9, 67), das die reiche Lösung vor Eintritt in das Drosselelement (5, 24, 34, 69, 94, 104) auf ein Zwischendruckniveau entspannt, sowie einen zweiten Absorber (8, 52, 68, 112), in dem die reiche Lösung auf dem Zwischendruckniveau einen Teilstrom des Kältemittels absorbiert und dabei Wärme an einen Teilstrom der armen Lösung nach Austritt aus dem Austreiber (3, 22, 44, 55, 70, 92, 115) abgibt.

2. Sorptionswärmepumpe (11, 51, 81, 111) nach dem vorgenannten Anspruch, ***gekennzeichnet durch*** einen parallel zu dem Absorber (12, 54, 82, 114) angeordneten dritten Absorber (13, 53, 83, 113), in dem ein Teilstrom der armen Lösung vor Eintritt in den Absorber (12, 54, 82, 114) einen Teilstrom des Kältemittels vor Eintritt in den Absorber (12, 54, 82, 114) absorbiert und dabei an die arme Lösung vor Eintritt in den Absorber (12, 54, 82, 114) Wärme abgibt.

3. Sorptionswärmepumpe (21, 51, 91, 111) nach dem vorgenannten Anspruch, ***gekennzeichnet durch*** einen zweiten Austreiber (23, 56, 93, 116), in dem ein Teilstrom der reichen Lösung parallel zu dem Austreiber (22, 55, 92, 115) Wärme aus der reichen Lösung zwischen Absorber (54, 114) und Drosselelement (24, 94) aufnimmt.

4. Sorptionswärmepumpe (31, 51, 101, 111) nach einem der vorgenannten Ansprüche, ***gekennzeichnet durch*** einen
Lösungswärmeübertrager (32, 57, 102, 117), in dem die arme Lösung vor Eintritt in den Absorber (33, 54, 103, 114) Wärme aus der reichen Lösung zwischen Absorber (33, 54, 103, 114) und Drosselelement (34, 104aufnimmt.

5. Sorptionswärmepumpe (1, 11, 21, 31, 41, 51) nach einem der vorgenannten Ansprüche, ***gekennzeichnet durch*** einen Verdichter (4, 15), der das gasförmige Kältemittel in den Absorber (2, 12, 33, 43, 54) fördert.

6. Sorptionswärmepumpe (41, 51) nach dem vorgenannten Anspruch, ***gekennzeichnet durch*** einen dritten Austreiber (42, 58), in dem ein Teilstrom der reichen Lösung parallel zu dem Austreiber (44, 55, 115) Wärme aus dem Kältemittel auf dem Zwischendruckniveau aufnimmt.

7. Sorptionswärmepumpe (61, 81, 101, 111) nach einem der Ansprüche 1 bis 4, ***gekennzeichnet durch*** einen Verflüssiger (62, 119), der das Kältemittel nach Austritt aus dem Austreiber (70, 115) verflüssigt, eine Kältemittelpumpe (64), die das flüssige Kältemittel nach Austritt aus dem Verflüssiger (62, 119) in einen Verdampfer (65, 85, 120) pumpt, in dem es vor Eintritt in den Absorber (66, 82, 103, 114) einen zweiten von außen zugeführten Wärmestrom aufnimmt und verdampft.

8. Sorptionswärmepumpe (1, 11, 21, 31, 41, 51, 61, 81, 91, 101, 111) nach einem der vorgenannten Ansprüche, ***dadurch gekennzeichnet*, *dass*** das Lösungsmittel Wasser und das Kältemittel Ammoniak ist.

9. Sorptionskreisprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung auf einem Hochdruckniveau das Kältemittel absorbiert und dabei Wärme abgibt, dann die reiche Lösung erst auf ein Niederdruckniveau entspannt wird, anschließend einen dem Sorptionskreisprozess von außen zugeführten Wärmestrom aufnimmt und dabei das Kältemittel austreibt, dann das Kältemittel aus der reichen Lösung ausgetrieben und gefördert, und die arme Lösung gepumpt und der Sorptionskreisprozess geschlossen wird, ***dadurch gekennzeichnet*, *dass*** die reiche Lösung aus dem Hochdruckniveau zunächst auf ein Zwischendruckniveau entspannt wird, einen Teilstrom des Kältemittels absorbiert und dabei Wärme an einen Teilstrom der nach dem Austreiben des Kältemittels verbleibenden armen Lösung abgibt.

## Claims

1. Sorption heat pump (1, 11, 21, 31, 41, 51, 61, 81, 91, 101, 111) comprising a gaseous refrigerant and a liquid solvent, a poor and a rich solution, wherein the poor and the rich solution are single-phase mixtures of the solvent and the refrigerant, and comprising an absorber (2, 12, 33, 43, 54, 66, 82, 103, 114), in which the poor solution absorbs the refrigerant at a high-pressure level and thereby releases heat; a throttle element (5, 24, 34, 69, 94, 104), which decompresses the rich solution to the low-pressure level after exiting from the absorber (2, 12, 33, 43, 54, 66, 82, 103, 114); an expeller (3, 22, 44, 55, 70, 92, 115), in which, after exiting from the throttle element (5, 24, 34, 69, 104), the rich solution receives a heat flow supplied from outside and thereby expels the refrigerant; a conveying element, which conveys the refrigerant, after exiting from the expeller (3, 22, 44, 55, 70, 92, 115), into the absorber (2, 12, 33, 43, 54, 66, 82, 103, 114); and a pump, which pumps the poor solution, after exiting from the expeller (3, 22, 44, 55, 70, 92, 115), into the absorber (2, 12, 33, 43, 54, 66, 82, 103, 114), **characterized by** a second throttle element (9, 67) which decompresses the rich solution before entering into the throttle element (5, 24, 34, 69, 94, 104) to a intermediate-pressure level, and a second absorber (8, 52, 68, 112), in which the rich solution absorbs a partial flow of the refrigerant at the intermediate-pressure level and thereby releases heat to a partial flow of the poor solution after exiting from the expeller (3, 22, 44, 55, 70, 92, 115).

2. Sorption heat pump (11, 51, 81, 111) according to the preceding claim, **characterized by** a third absorber (13, 53, 83, 113), which is arranged parallel to the absorber (12, 54, 82, 114) and in which a partial flow of the poor solution, before entering into the absorber (12, 54, 82, 114), absorbs a partial flow of the refrigerant, before entering into the absorber (12, 54, 82, 114), and thereby releases heat to the poor solution before entering into the absorber (12, 54, 82, 114) .

3. Sorption heat pump (21, 51, 91, 111) according to the preceding claim, **characterized by** a second expeller (23, 56, 93, 116), in which, in parallel to the expeller (22, 55, 92, 115), a partial flow of the rich solution receives heat from the rich solution between the absorber (54, 114) and the throttle element (24, 94) .

4. Sorption heat pump (31, 51, 101, 111) according to one of the preceding claims, **characterized by** a solution heat exchanger (32, 57, 102, 117), in which, before entering into the absorber (33, 54, 103, 114), the poor solution receives heat from the rich solution between the absorber (33, 54, 103, 114) and the throttle element (34, 104).

5. Sorption heat pump (1, 11, 21, 31, 41, 51) according to one of the preceding claims, **characterized by** a compressor (4, 15) which conveys the gaseous refrigerant into the absorber (2, 12, 33, 43, 54).

6. Sorption heat pump (41, 51) according to the preceding claim, **characterized by** a third expeller (42, 58), in which, in parallel to the expeller (44, 55, 115), a partial flow of the rich solution receives heat from the refrigerant at the intermediate-pressure level.

7. Sorption heat pump (61, 81, 101, 111) according to one claims 1 to 4, **characterized by** a condenser (62, 119) which liquifies the refrigerant after exiting from the expeller (70, 115); a refrigerant pump (64), which pumps the liquid refrigerant, after exiting from the condenser (62, 119), into an evaporator (65, 85, 120), in which it receives and vaporizes a second heat flow, supplied from outside, before entering into the absorber (66, 82, 103, 114).

8. Sorption heat pump (1, 11, 21, 31, 41, 51, 61, 81, 91, 101, 111) according to one of the preceding claims, **characterized in that** the solution is water and the refrigerant is ammonia.

9. Sorption circuit process comprising a gaseous refrigerant and a liquid solvent, a poor and a rich solution, wherein the poor and the rich solution are single-phase mixtures of the solvent and the refrigerant, and wherein the poor solution absorbs the refrigerant at a high-pressure level and thereby releases heat, then the rich solution is first decompressed to a low-pressure level, subsequently receives a heat flow supplied to the sorption circuit process from outside, thereby expelling the refrigerant, then the refrigerant is expelled and conveyed from the rich solution, and the poor solution is pumped, and the sorption circuit process is closed, **characterized in that**, the rich solution is initially decompressed from the high-pressure level to an intermediate-pressure level, absorbs a partial flow of the refrigerant, and thereby releases heat to a partial flow of the poor solution remaining after the expelling of the refrigerant.

## Revendications

1. Pompe à chaleur à sorption (1,11,21,31,41,51,61,81, 91,101,111) avec un agent frigorigène gazeux et un solvant liquide, une solution pauvre et une solution riche, sachant que la solution pauvre et la solution riche sont des mélanges monophasiques du solvant et de l'agent frigorigène, ainsi qu'avec un absorbeur (2, 12, 33, 43, 54, 66, 82, 103, 114) dans lequel la solution pauvre absorbe à un niveau de pression élevé l'agent frigorigène et élimine à cet effet de la chaleur, un élément d'étranglement (5, 24, 34, 69, 94, 104), qui relâche la solution riche vers la sortie de l'absorbeur (2, 12, 33, 43, 54, 66, 82, 103, 114) au niveau de pression bas, un bouilleur (3, 22, 44, 55, 70, 92, 115) dans lequel la solution riche vers la sortie de l'élément d'étranglement (5, 24, 34, 69, 94, 104) reçoit un flux thermique acheminé de l'extérieur et chasse à cet effet l'agent frigorigène, un élément de transport, qui transporte l'agent frigorigène vers la sortie du bouilleur (3, 22, 44, 55, 70, 92, 115) dans l'absorbeur (2, 12, 33, 43, 54, 66, 82, 103, 114) et une pompe, qui pompe la solution pauvre vers la sortie du bouilleur (3, 22, 44, 55, 70, 92, 115) dans l'absorbeur (2, 12, 33, 43, 54, 66, 82, 103, 114), **caractérisée par** un deuxième élément d'étranglement (9, 67), qui relâche la solution riche avant l'entrée dans l'élément d'étranglement (5, 24, 34, 69, 94, 104) à un niveau de pression intermédiaire, ainsi que par un deuxième absorbeur (8, 52, 68, 112) dans lequel la solution riche absorbe au niveau de pression intermédiaire une partie de flux de l'agent frigorigène et élimine à cet effet de la chaleur sur une partie de flux de la solution pauvre vers la sortie du bouilleur (3, 22, 44, 55, 70, 92, 115).

2. Pompe à chaleur à sorption (11, 51, 81, 111) selon la revendication précédente, **caractérisée par** un troisième absorbeur (13, 53, 83, 113) disposé parallèlement à l'absorbeur (12, 54, 82, 114) dans lequel une partie de flux de la solution pauvre absorbe avant l'entrée dans l'absorbeur (12, 54, 82, 114) une partie de flux de l'agent frigorigène avant l'entrée dans l'absorbeur (12, 54, 82, 114) et élimine à cet effet de la chaleur sur la solution pauvre avant l'entrée dans l'absorbeur (12, 54, 82, 114).

3. Pompe à chaleur à sorption (21, 51, 91, 111) selon la revendication précédente, **caractérisée par** un deuxième bouilleur (23, 56, 93, 116) dans lequel une partie de flux de la solution riche reçoit parallèlement au bouilleur (22, 55, 92, 115) de la chaleur de la solution riche entre l'absorbeur (54, 114) et l'élément d'étranglement (24, 94).

4. Pompe à chaleur à sorption (31, 51, 101, 111) selon l'une quelconque des revendications précédentes, **caractérisée par** un échangeur de chaleur à solution (32, 57, 102, 117) dans lequel la solution pauvre reçoit avant entrée dans l'absorbeur (33, 54, 103, 114) de la chaleur de la solution riche entre l'absorbeur (33, 54, 103, 114) et l'élément d'étranglement (34, 104).

5. Pompe à chaleur à sorption (1, 11, 21, 31, 41, 51) selon l'une quelconque des revendications précédentes **caractérisée par** un compresseur (4, 15), qui transporte l'agent frigorigène gazeux dans l'absorbeur (2, 12, 33, 43, 54) .

6. Pompe à chaleur à sorption (41, 51) selon la revendication précédente, **caractérisée par** un troisième bouilleur (42, 58) dans lequel une partie de flux de la solution riche reçoit parallèlement au bouilleur (44, 55, 115) de la chaleur de l'agent frigorigène au niveau de pression intermédiaire.

7. Pompe à chaleur à sorption (61, 81, 101, 111) selon l'une quelconque des revendications 1 à 4, **caractérisée par** un liquéfacteur (62, 119), qui liquéfie l'agent frigorigène après sortie du bouilleur (70, 115), une pompe à agent frigorigène (64), qui pompe l'agent frigorigène liquide après sortie du liquéfacteur (62, 119) dans un évaporateur (65, 85, 120), dans lequel il reçoit et évapore un deuxième flux thermique acheminé de l'extérieur avant entrée dans l'absorbeur (66, 82, 103, 114).

8. Pompe à chaleur à sorption (1, 11, 21, 31, 41, 51, 61, 81, 91, 101, 111) selon l'une quelconque des revendications précédentes, **caractérisée en ce que** le solvant est de l'eau et l'agent frigorigène de l'ammoniac.

9. Processus de circuit de sorption avec un agent frigorigène gazeux et un solvant liquide, une solution pauvre et une solution riche, sachant que la solution pauvre et la solution riche sont des mélanges monophasiques du solvant et de l'agent frigorigène et sachant que la solution pauvre absorbe l'agent frigorigène à un niveau de pression élevé et élimine à cet effet de la chaleur, la solution riche n'est ensuite relâchée qu'à un niveau de pression bas, reçoit ensuite un flux thermique acheminé de l'extérieur au processus de circuit de sorption et chasse à cet effet l'agent frigorigène, puis l'agent frigorigène est ensuite chassé de la solution riche et transporté et la solution pauvre est pompée et le processus de circuit de sorption est fermé, **caractérisé en ce que** la solution riche est relâchée du niveau de pression élevé d'abord à un niveau de pression intermédiaire, absorbe une partie de flux de l'agent frigorigène et élimine à cet effet de la chaleur sur une partie de flux de la solution pauvre restant après l'expulsion de l'agent frigorigène.
